# EUROPEAN PATENT APPLICATION

(11) **EP 1 780 873 A1**
(43) Date of publication of application: **02.05.2007**
(21) Application number: 06022131.4
(22) Date of filing: 23.10.2006
(51) Int. Cl.: H02K 7/06, F16H 25/22, F16D 1/05

(54) **Linear actuator**

(30) Priority: 25.10.2005 US 259175
(71) Applicant: Exlar Corporation, Chanhassen MN 55317-8518 (US)
(72) Inventor: Everson, Victor Alvin, Minnetonka Minnesota 55345 (US); Zerull, William Joseph, Minneapolis Minnesota 55419 (US)
(74) Representative: Lotti, Giorgio

(57) **Abstract**

A bi-directional linear actuator in which the threads of the drive member and its follower are not exposed and where all force bearing components are concentrically connected to a load is disclosed. The actuator includes an actuator assembly having an output cylinder, an input shaft, transmission rollers therebetween, a prime mover, and a housing assembly. The output cylinder of the actuator assembly is moved between retracted and extended positions by the prime mover. Rotation of the prime mover produces a corresponding rotation of the input shaft. The input shaft carries a plurality of transmission rollers about its circumference. The output cylinder includes an internally threaded bore. By inhibiting the rotation of the output cylinder, the engagement of the threads of the output cylinder with the transmission rollers provides a corresponding linear movement in the output cylinder along its longitudinal axis.

## Description

### Field of the Invention

The present invention generally relates to translating rotational motion to linear motion and systems therefor; more particularly relates to electrically powered linear actuators; and, more particularly still relates to a linear actuator having an input shaft, an output cylinder, and transmission rollers operatively connected therebetween.

### Background

Devices providing a reciprocating motion through an actuator member as that member is moved through an actuation stroke are known in the art. Such actuators may be fluid powered -- hydraulically or pneumatically -- or electrically powered. An advantage to a hydraulic powered actuator is that it provides high linear forces in an extremely small packaging arrangement. Such arrangement typically takes the form of a cylinder/piston arrangement. One drawback of hydraulic systems is the potential for leaks. Depending on the environment in which they are employed, these leaks may undesirable. Additionally, although computer control of a hydraulic cylinder actuator may be accomplished, it generally involves substantial complexity. Pneumatic driven actuators while clean are difficult to accurately control due to the compressible nature of the air.

An electric motor, which may be employed to develop the fluid power for the fluid systems described above, is a highly efficient and reliable system for acting as a prime mover (e.g., a power source for the system). In the context of a fluid system, however, much of the efficiency is lost in the generation of the fluid power. Additionally, computer control of an electric motor is relatively simple. Accordingly, the rotating output shaft of an electric motor is often linked to a mechanical device that converts the rotational motion into reciprocal or linear motion. The most common method is to use a lead screw coupled directly to the motor output shaft with a follower unit traveling along the threads of the lead screw.

The motor/lead screw combination addressees some of the difficulties of a fluid powered system. However, at the point of application of the reciprocating motion, this combination requires considerably more space. Typical prior art arrangements also result in exposure of the threaded components and/or nonconcentric connection of the lead screw and follower assembly to the load.

An example of one prior art system is disclosed in U.S. Pat. No. 2,683,379 (Strandgren) in which a reciprocating member is enclosed by a threaded drive element. Typically, a motor assembly is coupled to an end of such a drive element contributing to the overall length of the actuator unit.

U.S. Pat. No. 3,660,704 (Paine et al.) discloses a motor concentrically mounted about a threaded drive element. This reduces the length of the actuator assembly unit in short stroke applications, and encloses the threads. However, it substantially lengthens the actuator in long stroke applications since a smooth section equal in length to the threaded section must be included in order for the actuator shaft to slide through the bushing.

U.S. Pat. No. 5,491,372 and U.S. Pat. No. 5,557,154 (commonly assigned to the assignee hereof) disclose a linear actuator which addresses the shortcomings of the previously described systems. In addition to overcoming these shortcomings, accurate positioning and control as well as specific applications are disclosed.

There still exists in the art, however, a need for improvements in the diameter and attendant rigidity of the output shaft, lower inertia, and higher resistance to side load. Additionally, an efficiency in manufacturing may be accomplished if a greater flexibility could be achieved in coupling the linear actuator to a variety of input power sources and configurations. The present invention overcomes the shortcomings of the prior art and addresses these needs in the art.

### Summary

The present invention provides a powered, bi-directional linear actuator of relatively small size (length and diameter) in which the threads of the drive member and its follower are not exposed and where all force bearing components are concentrically connected to a load. The actuator includes an actuator assembly having an output cylinder, an input shaft, transmission rollers therebetween, a prime mover, and a housing assembly.

The output cylinder of the actuator assembly is moved between retracted and extended positions by the prime mover. Specifically, rotation of the prime mover produces a corresponding rotation of the input shaft. The input shaft carries a plurality of transmission rollers about its circumference. The output cylinder includes an internally threaded bore. By inhibiting the rotation of the output cylinder, the engagement of the threads of the output cylinder with the transmission rollers provides a corresponding linear movement in the output cylinder along its longitudinal axis.

A preferred environment in which the present invention may be employed includes controlling the physical position of a distal end of the output cylinder by controlling the rotation of the primary mover. Embodiments constructed in accordance with the principles of the present invention provide for a number of benefits and advantages.

First, the output cylinder may be constructed of a relatively larger diameter than output shafts (e.g., solid shafts) as described above in the '154 patent. The internally threaded cylinder --which serves as the output cylinder -- shrouds the roller screw mechanism and input shaft within its diameter. In previous designs, the input shaft diameter limited the output rod diameter - e.g., it was required to be significantly smaller than the cylinder diameter. Therefore, the present invention provides a more structurally robust output cylinder. For example, the output cylinder is more difficult to bend.

Second, the overall effective inertia is lower. In the present invention, the internally threaded cylinder - the largest diameter part - is the rotating element. Generally, the rotating input shaft is typically on the order of one-half (½) the diameter of the threaded cylinder. Accordingly, the construction significantly lowers the rotating inertia, and improving the potential for higher performance.

Third, the present invention has a higher resistance to side loads. In the present design, the transmission roller assembly remains stationary (axially). The long internally threaded cylinder extends and retracts as the roller assembly rotates. In previous designs - as well as with traditional actuator designs, such as with a ball or acme screw mechanismas the follower extends the effect of a side load on the output rod is magnified. As the output rod extends, the lever at which the side load is applied is longer, applying a greater load at the follower, but also the distance from the follower to the support bushing becomes shorter as well. The side load is carried by the support bushing and the follower. This type of side load becomes significantly more severe as the rod is extended allowing the follower to become more "cocked" and placing higher stresses at the ends of the follower assembly. In embodiments constructed in accordance with the current invention, the roller assembly remains fixed in a location beneath the front support bearing and there are two guide bushings supporting the output cylinder rod. One bushing is fixed in the housing while the other is affixed to the cylinder and translates with it. In this arrangement, the two bushings carry the majority of the side load applied to the actuator rod. As the actuator extends, however, the amount of load applied to the roller assembly is limited by its ability to move and the two, larger, longer rigid bushings directly support the cylinder. The result is that the amount of side load that can be transmitted to the roller assembly even in the most extreme case of the rod fully extended is thereby limited.

Fourth, by incorporating a two-piece input shaft, the input shaft and bearings can be shared with the output shaft and bearings of a planetary gear reducer. This allows the use of gear reduction within a space that is typically no more than would be needed for coupling a motor shaft and actuator shaft together. Therefore, smaller, more cost effective motors can by utilized with a minimized space.

Therefore, according to one aspect of the invention, there is provided a linear actuator, comprising: a housing assembly; an elongated input shaft rotatably supported relative to the housing, the input shaft having at least a threaded portion; an elongated translating output cylinder with an internally threaded bore; a roller assembly, the roller assembly including camming surfaces for engaging the threaded portion of the input shaft and the output cylinder, wherein the internal threads of the output cylinder contacting the roller camming surfaces causes axial movement of the output cylinder along its threaded length in response to the selective rotation of the input shaft.

While the invention will be described with respect to preferred embodiment configurations and with respect to particular devices used therein, it will be understood that the invention is not to be construed as limited in any manner by either such configuration or components described herein. Also, while particular types of working environments and materials are described herein, it will be understood that such environments and materials are not to be construed in a limiting manner. Instead, the principles of this invention extend to any working environment in which controlled linear motion is desired. These and other variations of the invention will become apparent to those skilled in the art upon a more detailed description of the invention.

The advantages and features which characterize the invention are pointed out with particularity in the claims annexed hereto and forming a part hereof. For a better understanding of the invention, however, reference should be had to the drawings which form a part hereof and to the accompanying descriptive matter, in which there is illustrated and described a preferred embodiment of the invention.

### Brief Description of the Drawings

The illustrative embodiments may best be described by reference to the accompanying drawings where:
Figure 1 is a schematic elevated view of the linear actuator of the present invention.
Figure 2 is a schematic view of a first preferred embodiment of the input shaft 25 of the linear actuator of Fig. 1, illustrated with a prime mover 40 cooperatively connected thereto.
Figure 3a is an alternative embodiment of the input shaft 25 of Fig. 2.
Figure 3b is an alternative embodiment of the input shaft of 25 of Fig. 2 including a planetary gear reducer.
Figures 4a and 4b are additional alternative embodiments of the input shaft 25 of Fig. 2.
Figure 5 is a schematic cross sectional view of the linear actuator of Fig. 1.
Figure 6 is a perspective view of the roller assembly 35 located on second end of input shaft 25.
Figure 7 is a cross sectional view of the roller assembly 35 of Fig. 6.
Figure 8 is a schematic view of a portion of one embodiment of a two piece input shaft 25.
Figure 9 is a cross sectional view of a portion of an alternative embodiment two piece input shaft 25.
Figure 10 is a cross sectional view of an output cylinder 30 with the internal threads 950 illustrated.
Figure 11 is a perspective view of an anti-rotation member 960.
Figures 12a - 12c illustrate three different configurations of a prime mover being connected to the actuator assembly, and the different housing assemblies therefore.
Figures 13a-13c illustrate the actuator assembly 20 in operation and the resultant extension of the output cylinder 30.
Figure 14 is an elevated end view of the output cylinder 30 illustrating the guide channels.

### Detailed Description

The invention generally relates to translating rotational motion to linear motion and systems therefor; more particularly relates to electrically powered linear actuators; and, more particularly still relates to a linear actuator having an input shaft and an output cylinder. The linear actuator is particularly suited for controlled positioning of the distal end of an output cylinder. This functionality is commonly employed in many manufacturing environments, although such an application is only exemplary of the many applications to which principles of the present invention may be applied.

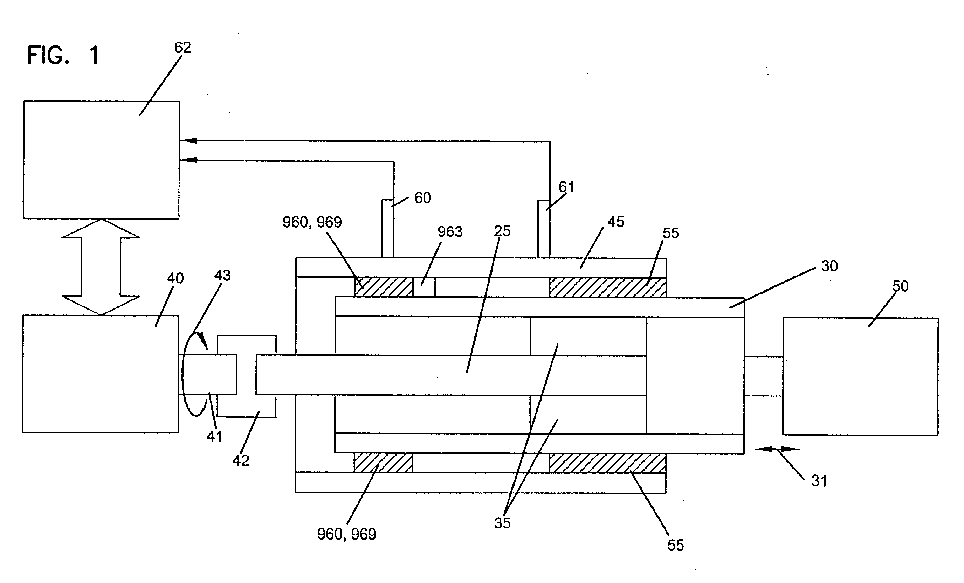

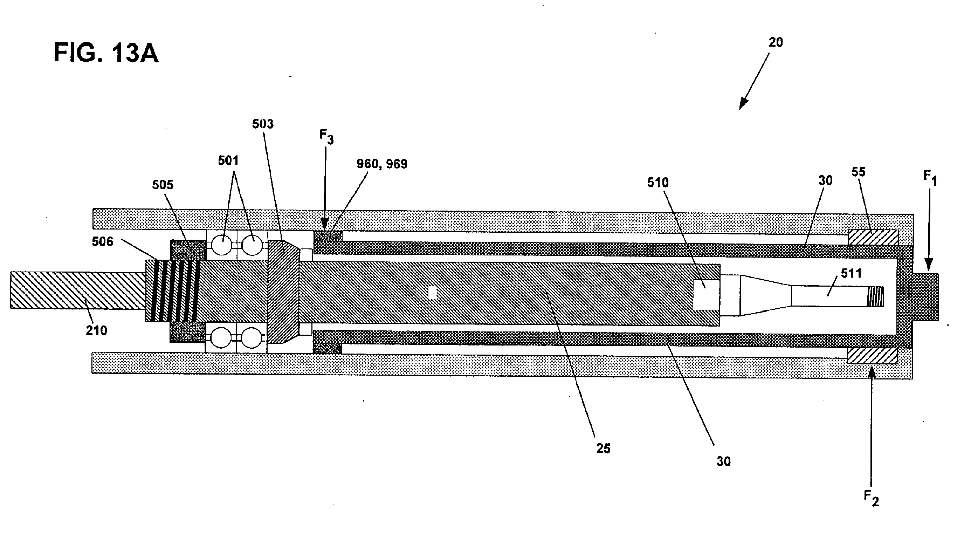

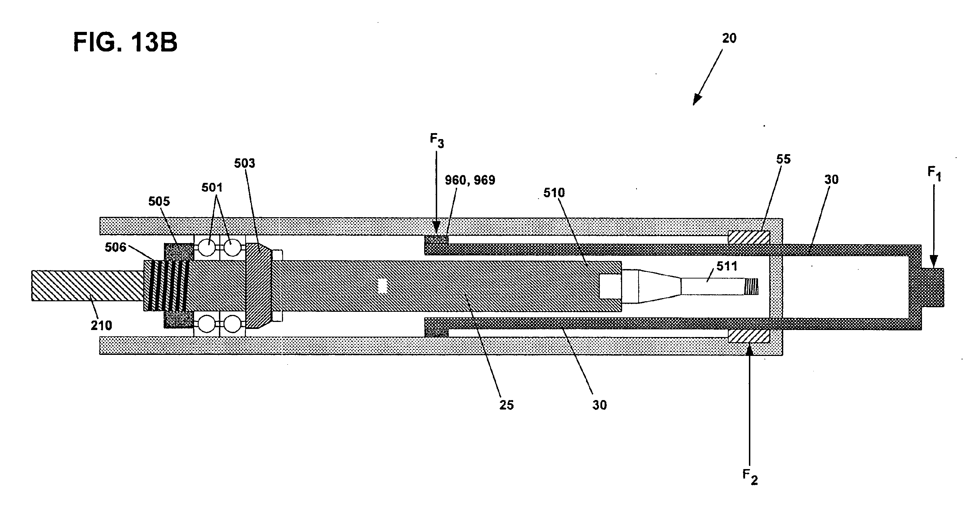

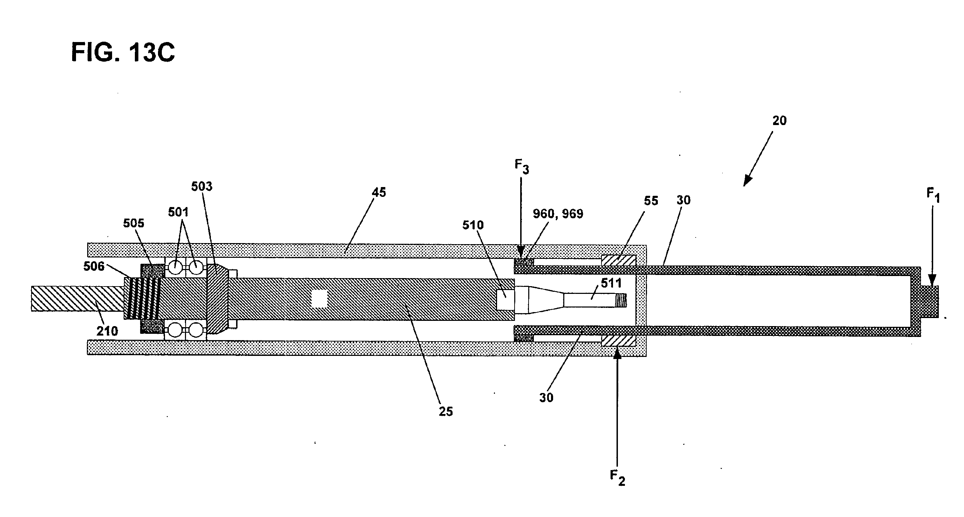

A preferred embodiment of a linear actuator in accordance with the present invention is shown in Fig. 1 (designated generally at 20) and includes an actuator assembly (including an input shaft 25, an output cylinder 30 and a plurality of transmission rollers 35), a prime mover 40 and a housing assembly 45. The prime mover 40 rotates the input shaft 25 via output shaft 41 and coupler 42. The rotation is designated at 43. Rotation of the input shaft 25 causes the transmission rollers 35 to engage and rotate, causing linear motion of the internally threaded output cylinder 45 (e.g., the planetary rotation of the transmission rollers cause the output cylinder to translate in a linear direction due to the camming effect between the respective threads). As the output cylinder 30 cannot rotate, the engagement of the transmission rollers 35 forces axial or linear movement of the output cylinder 30. The linear movement is designated at 31 and includes a retracted position (shown in Fig. 1 and Fig. 13a), and an extended position (best seen in Fig. 13c). Housing 45 encloses the actuator assembly. Support bushing 55 is fixed in the housing 45, while guide bushing 969 translates with the output cylinder 30. The anti-rotation member 960 may be integral or formed as a part of the guide bushing 969. Magnet 963 may also be formed as part of the anti-rotation member 960.

It will be appreciated that the output cylinder 30 may be extended partially to any position between the retracted and extended positions by controlling the rotation of the input shaft, as will be discussed more fully below. The various components of the actuator will next be described.

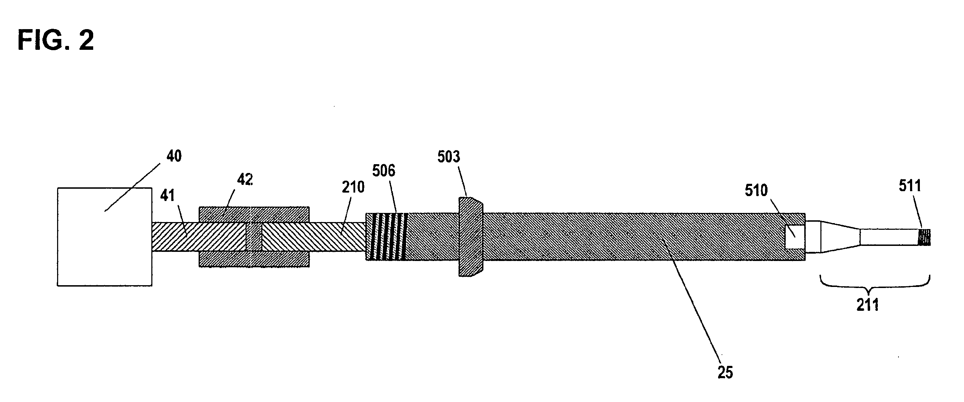

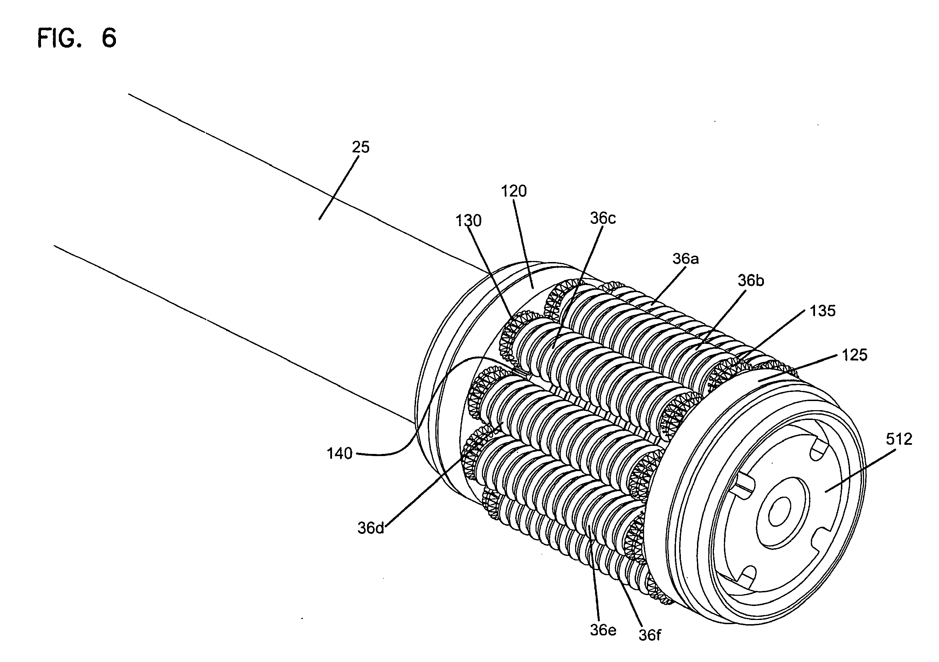

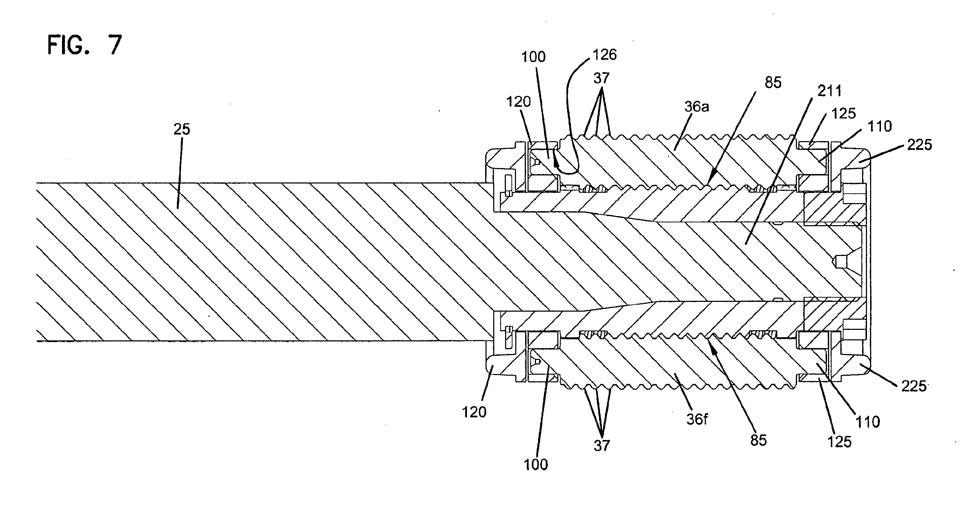

Now referring to Fig. 2, the input shaft 25 can be constructed in several manners. In a preferred embodiment, the input shaft 25 is a single elongated cylindrical shaft. The two ends 210, 211 of the input shaft 25 serve distinct functions, with each end arranged and configured to serve its respective function. The first end 210 has a primary purpose to interface with the power source or prime mover 40. Second end 211 has a primary purpose to interface with the transmission rollers 35 (best seen in Figs. 6 and 7).

The first end 210 generally interfaces with the prime mover 40 (and its output shaft 41) by way of a shaft coupler 42. Accordingly, first end 210 is constructed to mate with the desired shaft coupler 42. The outer surface of the coupling portion of first end 210 may be polished and smooth. The outer surface of the coupling portion of first end 210 may also include camming surfaces, threads, and/or gear teeth. In another embodiment, the coupling portion of first end 210 may have its outer surface machined with gear teeth so as to allow it to interface with another gear (or set of gears)(not shown) instead of shaft coupler 42.

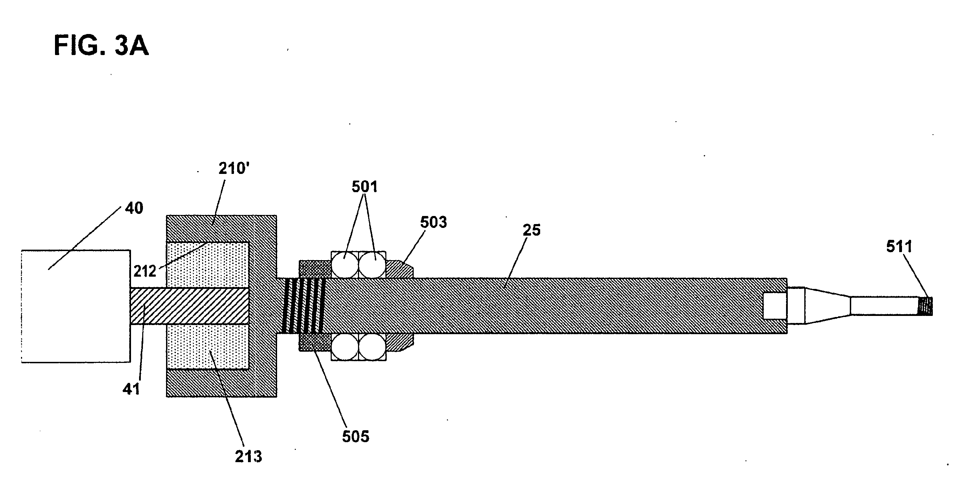

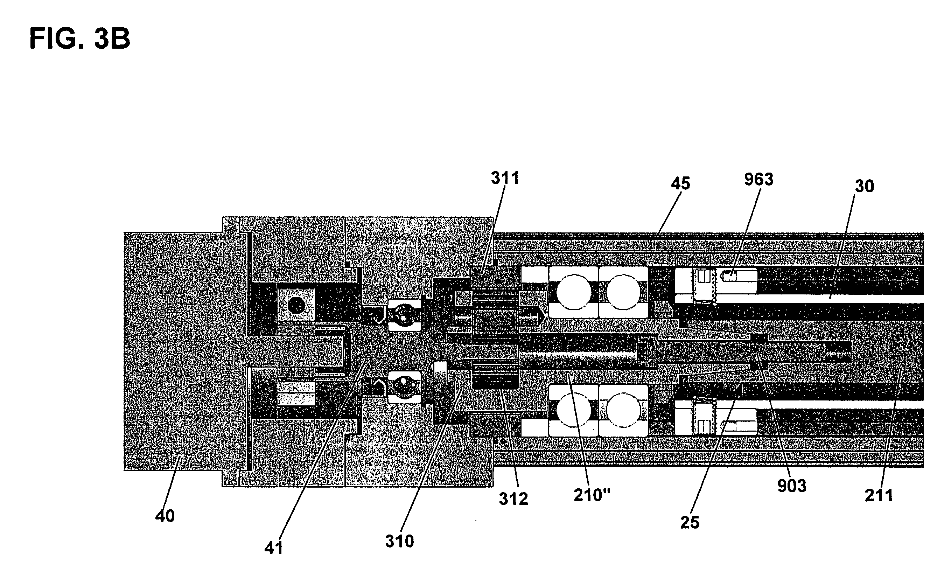

Fig. 3a functionally illustrates a second preferred embodiment. In this embodiment, the first end 210' is enlarged considerably. The enlarged end 210' is bored out and has gear teeth along its inner surface 212. The inner surface 212 thereby serves as a ring spline, which mates with a gear (or spline) 213 attached to the output shaft 41 of the power source 40. In a third embodiment shown in Fig. 3b, the first end 210' is machined to accept planet gears located by planet pins which are affixed to the end 210' of the input shaft 25. The first end 210" becomes the planet carrier 310 and output shaft of a typical planetary gear system. The planet gears engage a ring gear 311 of a larger diameter that is affixed and stationary within the housing 45. The power source output shaft 41 with a gear machined or attached serves as a sun gear 312 for the planetary gear reducer.

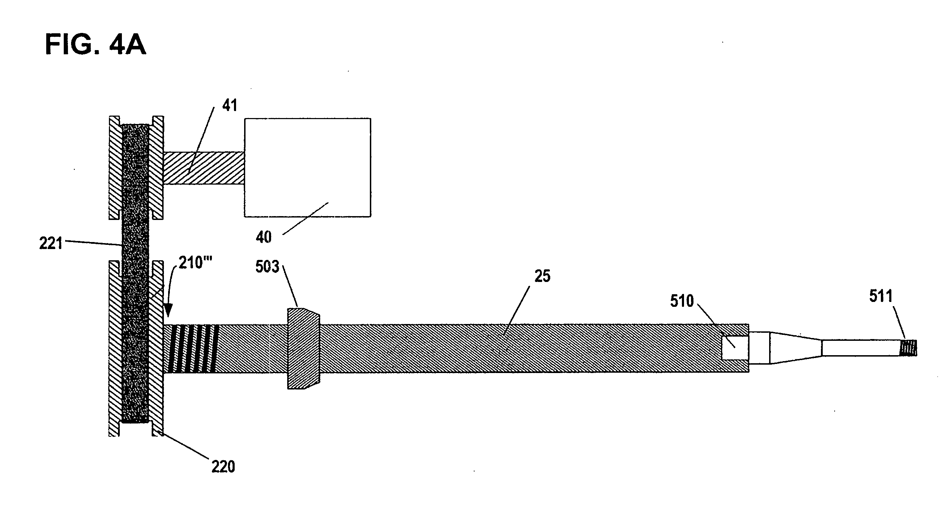

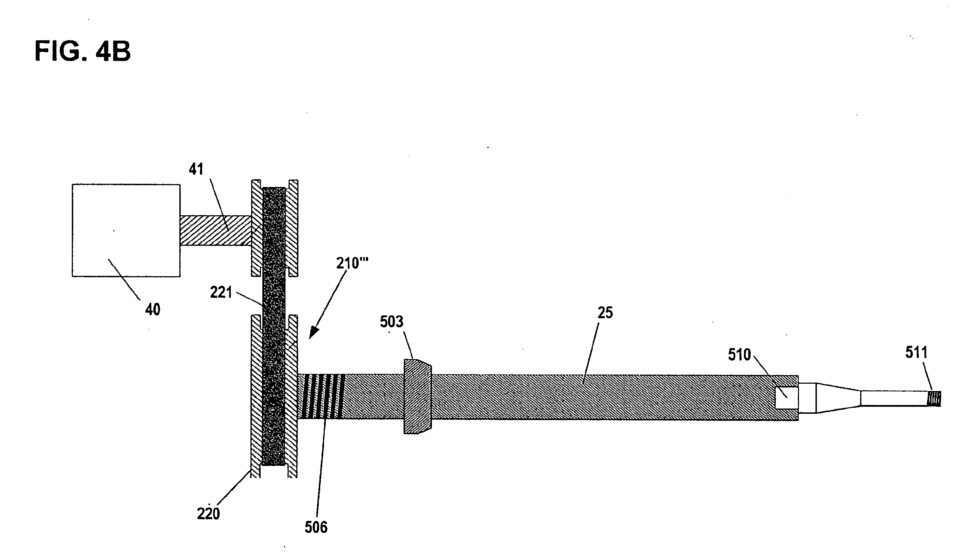

A fourth embodiment includes the first end 210'" enlarged to form a pulley 220, as shown in Figs. 4a and 4b. The surface of the pulley 220 can be smooth to accommodate a smooth belt 221, or it can have notches that accommodate a belt that has teeth. In this embodiment, the power source 40 is parallel to the input shaft 25. However, the power source 40 may be positioned along side the input shaft 25 (as shown in Figure 4a) or offset (as shown in Figure 4b).

In yet another embodiment, the first end 210''' may be enlarged with sprocket teeth on the outer surface of the enlarged portion. In this configuration, the enlarged portion may interface with a chain drive (not shown). In this embodiment, the position of the power source 40 relative to the input shaft 25 may be positioned as shown in Figs. 4a and 4b. In the embodiments described, the interface between the power source and the input shaft may be included within the housing assembly 45, or it may be external to the housing assembly 45.

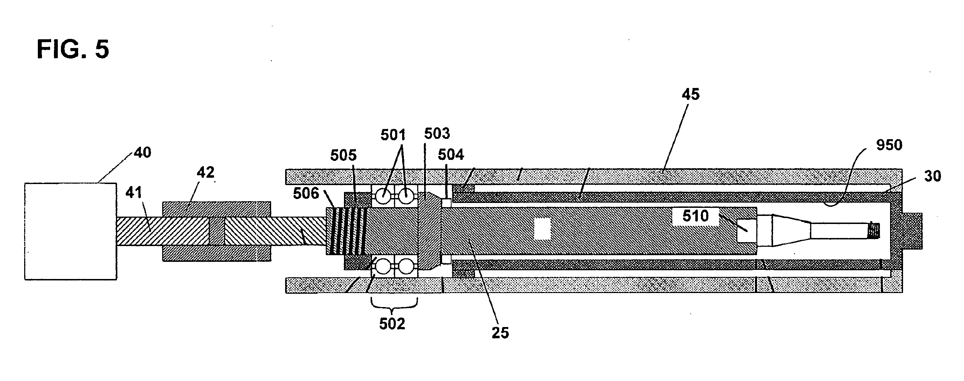

Referring now to Figs. 5, 6, and 7, the transmission roller assembly 35 will next be described. Such assembly and its rollers are generally described in U.S. Pat. No. 5,491,372 and U.S. Pat. No. 5,557,154. These patents are commonly assigned to the assignee hereof, and are incorporated herein by reference and made a part hereof. The input shaft 25 and the transmission rollers 35 are axially aligned within the threaded bore 70 of the output cylinder 30. The input shaft 25 is coupled with the transmission rollers 35. The transmission rollers 35 include a plurality of individual rollers 36a-36f spaced around the second end 211 of the input shaft 25. The individual rollers 36 include raised ribs 37 which are arranged and configured in a generally helical pattern and extend along the axial extent thereof. The ribs 37 define camming surfaces that engage the threaded bore 950 of the output cylinder 30. It will be appreciated that while rollers 36a-36f are illustrated in the figures, there are additional rollers not shown.

The second end 211 interfaces with the transmission roller assembly 35. This portion of the input shaft 25 includes ribs 85 which are engaged by the annular ribs 37 of the transmission rollers 36 to advance the output cylinder 30. Thus, when the prime mover 40 selectively rotates the shaft 41 (clockwise or counterclockwise), the input 25 is turned accordingly, causing the ribs 85 of the input shaft 25 to engage the ribs 37 of the transmission rollers 36, which engage the inner threads 950 of the output cylinder 30. This causes the output cylinder 30 to move bi-directionally (depending on the direction of rotation) and linearly along its elongated axis relative to the input shaft 25, which is stationary to the housing assembly 45 except for its rotary motion.

The engagement of the transmission rollers 35 with the ribs 85 of the input shaft 25 and the inner thread 950 is primarily of a rolling nature. Providing an efficient transmission of rotary power from prime mover 40 to linear power of the output cylinder 30. The many engagement points between the transmission rollers 35 and the ribs 85 of the input shat 25 and the cylinder threads 950 provide a high load capacity to the output cylinder 30.

At least three transmission rollers 36 are used. The transmission rollers 36 are mounted for rotation about the second end 211 of the input shaft 25 and include forward and rear support journal extensions 100 and 110 which cooperate with forward and rear support rings 120 and 125 respectively. Each of the forward and rear support rings 120 and 125 include support holes 126 which accept one of the extensions 100, 110. The number of support holes 126 on each of the forward and rear support rings 120 and 125 corresponds to the number of transmission rollers 36. The forward support journals 100 of each of the transmission rollers 36 extend through a support hole 126 of the forward support ring 120. Likewise, the rear support journals 110 of each of the transmission rollers 36 extend through a support hole 126 of the rear support ring 125. Thus, the forward and rear support rings 120 and 125 maintain the spacing of the transmission rollers 36 about the input shaft 25 during operation. The journal extensions 100 and 110 are secured within the holes 126 of support rings 120 and 125 in any known manner.

In another embodiment, the transmission rollers 36 of the actuator assembly 35 include forward and rear gear teeth 130 and 135 (best seen in Fig. 6). Further, the input shaft 25 (about which the transmission rollers 36 are positioned) includes forward gear teeth 140 and rear gear teeth (not shown). The forward and rear gear teeth 130, 135 of the transmission rollers 36 mesh with the respective forward and rear gear teeth 140 of the input shaft 25 to maintain the relative position of the transmission rollers 35 while the input shaft 25 rotates and the output cylinder 30 moves along its axis. The interaction of the gear teeth 130, 135 of the transmission rollers 36 and the gear teeth 140 of the input shaft 25 maintains the transmission rollers 36 in an axial orientation and prevents slippage therebetween.

In a further embodiment, the camming surfaces of the transmission rollers 36 are defined by annular rings (not shown) instead of ribs 37 as described above. Likewise, the portion of the input shaft 25 (about which the transmission rollers 36 are spaced) includes rings instead of ribs.

Continuing now with Fig. 5, the input shaft 25 is supported and held in place relative to the housing assembly 45 by one or more bearings 501. In the preferred embodiment, two bearings are utilized, however, other number of bearings (or other bushing type devices) may be utilized depending on the loads, forces and duty cycles of the environment in which the actuator is used. The bearings 501 support the input shaft 25 at the region designated as 502. The bearings 501 are inserted onto the shaft 25 and physically located against bearing shoulder 503. The bearing shoulder 503 can be integral to the input shaft 25, or the bearing shoulder 503 can be an additional collar that is secured to the input shaft 25. The bearing shoulder 503 can also serve as a stop (e.g., for preventing the output cylinder 30 from retracting any further towards first end 210. An o-ring 504 or other component made of suitable material can be included to cushion any impact that may occur when the output cylinder 30 is fully retracted. Cushion of impact may also be performed by rear impact cushion 225 (i.e., by contacting the distal end 953 as the output cylinder 30 retracts completely).

The bearings 501 are prevented from moving axially along the input shaft 25 towards the first end 210 by a bearing nut 505 that is threaded onto the input shaft 25 at the threaded region 506 of the input shaft 25. It will be appreciated by those of skill in the art that other devices and methods may be used to secure the bearings 501. For example, a retaining ring could be used in place of a bearing nut.

In embodiments described in connection with Figs. 3a, 3b, 4a and 4b, the enlarged diameter portion of the input shaft 25 may serve to prevent the bearings 501 from moving towards first end 210. In these types of embodiments, the bearings 501 need to be assembled in-place or assembled onto the input shaft 25 before the bearing shoulder 503 is attached. The bearing shoulder 503 can be made of two or more pieces that are assembled and attached to the input shaft 25 to form the complete bearing shoulder 503.

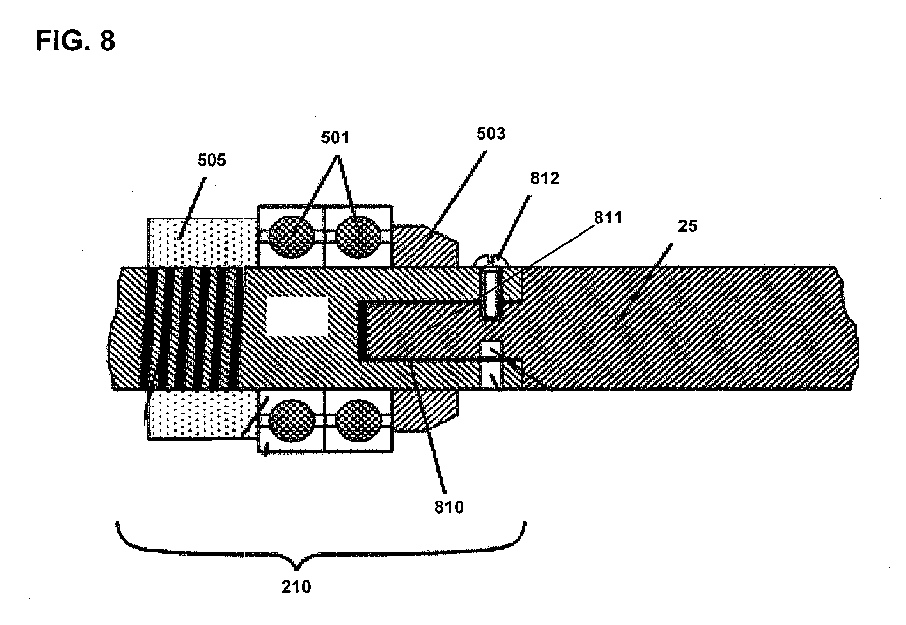

In another embodiment shown in Fig. 8, the input shaft 25 can comprise a plurality of assemblies; however, when connected together to one another, the assemblies function as a single input shaft. Generally, the first end 210 can be arranged and configured to accommodate a large number of prime mover and connection member configurations -- thereby providing greater flexibility in different applications and environments. The second end 211 generally retains the same configuration regardless of the type or form of connection that the first end 210 takes. This allows for a greater efficiency of manufacturing and cost of the linear actuator. It will be appreciated, however, that it may be desirable and/or necessary for the entire input shaft 25 to take the form of a modified or unique component in certain applications. Also, it will be appreciated that although the second end 211 generally retains the same configuration, changing the length is oftentimes desirable or required in order to lengthen or shorten the stroke. Even with this requirement, however, the number of distinct input shafts which may be required for a manufacturing inventory can be significantly reduced by implementing the two piece shaft described herein.

Other advantages of a two piece input shaft include manufacturing complete input shafts of various lengths. For example, the second end 211 can be made as a standard length or set of lengths. The relatively simpler first end 210 can be manufactured to be any length. This allows the manufacturer to use bar stock and cut to whatever length the customer desires or make several standard lengths while needing no special equipment to accommodate any excessive length of the total input shaft 25 while trying to form the complex elements of second end 211.

As described above, the first end 210 of input shaft 25 operatively connects to a prime mover 40 (e.g., a rotational power source) by way of a coupling means or device 42. Also as described above, the diameter of the first end 210 may be sized to fit into a typical shaft coupling device 42. It will be appreciated, however, that such device illustrated in the Figures is representative and other coupling devices may also be utilized. The functionality of such devices is to connect the output member of the prime mover 40 (and transfer the rotational energy) to the input shaft 25. Accordingly, the coupling member may take the form of camming surfaces, threads, gear teeth, etc. First end 210 may also take an enlarged diameter form in which the diameter is bored out and includes a gear tooth arrangement along an inside circumference. The gear tooth arrangement may be arranged and configured to mate with a gear or spline that is attached to the power source output shaft 41. Further, the connection may include a planetary gear system, sprocket teeth, and/or a belt and pulley arrangement.

In a preferred two piece input shaft 25, a bearing nut 505 and shoulder 501 may be utilized to secure the bearings in a physical location along the longitudinal axis of the input shaft 25. In the embodiment shown in Fig. 8, both the nut 505 and shoulder 503 are located on the first end 210 portion of the assembly. Also shown in Fig. 8 is the connection between the first end 210 and the second end 211 of the input shaft 25. Preferably the first end 210 includes a bored out, female portion 810 into which a reduced diameter, male portion 811 is inserted. A bolt 812 is used to secure the two assemblies together and prevent rotation between the two. However, other locking pins, a locking thread, bolts, or a slot and key arrangement may be utilized to prevent rotation between the two assemblies.

It should be noted that Fig. 8 illustrates two holes, but only one bolt 812. It will be apparent that a second securing member such as a bolt or screw may be used. Also, the bolt 812 is shown with a rounded head and extending above the circumference of the input cylinder 25. However, such connection may be made flush or recessed. Further, while the holes are shown as 180 degrees across from each other (e.g., having the same location along the axial length of the input shaft 25), the holes might be staggered along the length and/or oriented in a different angular position relative to one another.

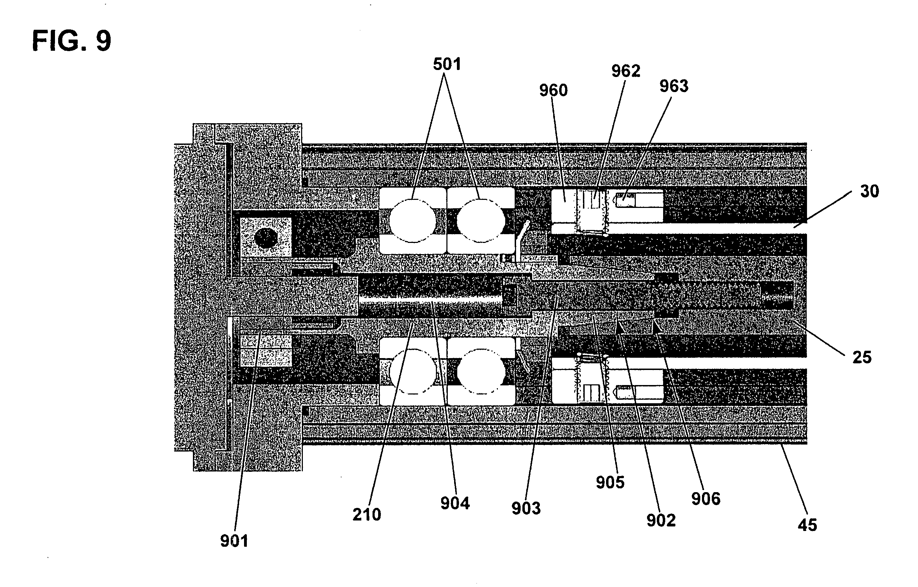

Fig. 9 illustrates a second preferred embodiment of a two piece input shaft 25 which includes a tapered fit connection between the two assemblies. Here, the first end 210 includes a proximal end 901 defined as being closer to the connection means from the prime mover 40 and a distal end 902 defined as being further from the connection means from the prime mover 40 (and closer to the second end 211). The first end 210 is bored out to accommodate a bolt 903 or other securing member, wherein the diameter of the bored area 904 is large enough throughout to accommodate the shaft of the bolt 903. The distal end 902 includes a taper 905 which reduces in diameter. The tapered, male, distal end 902 is sized and configured to be inserted into a corresponding tapered, female, void in second end 211. The female void terminates in a threaded portion to accept the bolt 905. Accordingly, when the taper 905 is inserted into the void 906, the bolt is threaded into the threaded portion of the void hole, and the bolt 903 is tightened, then the two assemblies are drawn closer to each other, progressively causing the tensional and magnified frictional forces (due to the taper fit) between the first end 210 and second end 211 to increase. When the bolt is fully tightened, the forces of tension and friction between the tapered surfaces are sufficient to secure the two assemblies together. It will be apparent to those of skill in the art that the taper and corresponding receiving void may be reversed between the two assemblies.

The input shaft 25 can include a flat 510 (best seen in Fig. 5) included so that one may use a wrench or other such tool to hold the input shaft 25 without scoring or otherwise damaging the input shaft 25 whenever one wishes to tighten or loosen the bearing nut 505 or the transmission roller nut 512 (best seen in Fig. 6). The threaded portion 511 onto which the nut 512 is secured is best seen in Fig. 5.

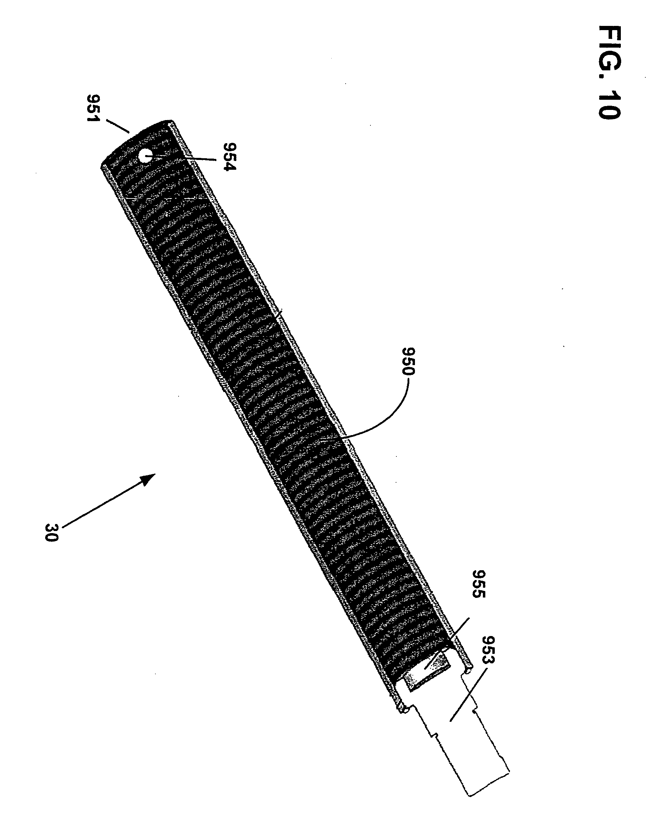

Referring to Figs. 1 and 10, the output cylinder 30 of the linear actuator 20 is an elongated translating output cylinder means with an internally threaded bore 950. When the input shaft 25 rotates, the threaded portion 85 of the input shaft 1 engages the transmission rollers 36. As the transmission rollers 36 are engaged and begin to rotate themselves, the transmission rollers 36 likewise engage the internal threads 950 of the output cylinder 30. When so engaged, the output cylinder 30 moves linearly along its longitudinal axis. The output cylinder 30 thereby extends and retracts depending on the rotational direction of the input shaft 25.

The output cylinder has a proximal end 951 defined as the end located closer to the prime mover input and a distal end 952 defined as the end located closer to the load or work piece. When the actuator is fully assembled and the output cylinder 30 is fully retracted into the actuator housing 45, the proximal end 951 may contact the bearing shoulder 503.

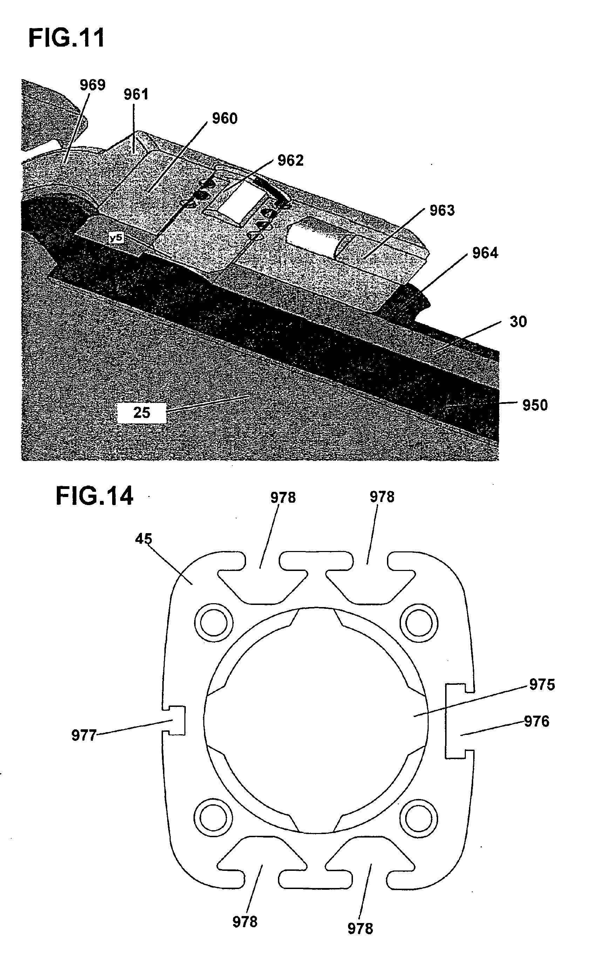

A hole 954 (or plurality of holes spaced circumferentially around the output cylinder 30) is formed near the proximal end 951. While the hole(s) 954 is preferably positioned near proximal end 951, it may optionally be located at any point along the longitudinal length of the output cylinder 30. The hole 954 is arranged and configured to attach an anti-rotation member 960 and cylinder guide bushing 969 (best seen in Fig. 11). The function of the anti-rotation member 960 is to prevent the output cylinder 30 from rotating about its longitudinal axis when the internal threads are engaged by the transmission rollers 35. The function of the guide bushing 969 is to support and guide the proximal end 951 of the output cylinder 30 as it extends and retracts. The guide bushing 969 also bears side loads that are applied to the output cylinder during operation.

The anti-rotation member 960 and guide bushing 969 can be formed as a single piece (e.g., that fits over the proximal end 951 of the output cylinder 30) or as two or more pieces that are assembled together. The anti-rotation member 960 preferably has one or more protrusions 961 that extend into guide paths 975 (best seen in Fig. 14) that run the length of the housing assembly 45. The raised area designated 962 is the location for a screw, bolt or other fastener to extend through the anti-rotation member 960 and secure the mechanism to the output cylinder via hole 954.

In operation, as the transmission rollers 36 engage the inner threads 950 of the output cylinder 30, the output cylinder 30 -- if not restricted -- will try to rotate about its elongated axis. The protrusion 961 will come in contact with the walls of the guide paths 975 of the housing assembly 45, thereby preventing any such rotation.

The anti-rotation member 960 may optionally include a magnet 963. In this case, as the output cylinder extends or retracts, the anti-rotation member 960 being secured to the output cylinder 35 will move back and forth along. One or more Hall Effect sensors (60 and 61 best seen in Fig. 1) or similar device can be used to determine the relative position of the magnet 963, and by inference determine the position of the output cylinder 30. This position information can be communicated to any known control system and used accordingly. The sensors 60,61 may be mounted on the housing assembly 45 via slots 976 or 977 (best seen in Fig. 14). Other slots 978 may be included in the housing assembly 45 for mounting of the linear actuator in the environment in which it is employed.

It will be appreciated that if the output cylinder 30 is connected to a load 50 in such a way that the load 50 prevents rotation of the output cylinder 30, then the anti-rotation member 960 may not be necessary. However, the bushing portion 969 may still be desirable/required. Also, the anti-rotation member 960 may still be utilized if the magnet 963 is included for position sensing. Further, the anti-rotation member 960 can also serve to prevent the output cylinder 30 from being extended beyond the point where the transmission rollers 35 fully engage the internal threads 950.

The distal end 953 of the output cylinder 30 may be unitary or integral, or may be a separate piece that is welded or brazed or otherwise fixed to the end of the output cylinder 30. Distal end 953 may include a cavity 955 that is intended to accommodate the end nut 512 of the input shaft 25. As the output cylinder 25 retracts, the end nut 512 may extend beyond the furthest extent or length of the input shaft 25. In this situation, the input shaft nut 512 avoids coming into contact with the distal end 953.

If the distal end 953 is constructed of a separate piece, then the manufacture of the threaded length of the output cylinder/output means 30 is simpler. In this case, the manufacturer can make a cylinder of any length with internal threads. At a later time, the cylinder may be cut to any desired length. Further, the distal end 953 can be manufactured as a standard part, irrespective of the end length of the complete output cylinder 30.

A seal 964 made of rubber or some otherwise resilient and flexible member may be included to serve as a cushion against any impact between the anti-rotation member 960 and the housing assembly 45 when the output cylinder 30 is fully extended. Also, distal end 953 may be arranged and configured to accommodate any standard or custom interface with the actuator's load 50.

When the magnet 963 is utilized to determine the position of the actuator 20, sensors 60 and 61 may be included. The output from these sensors is provided to a controller 62. The controller 62 provides input to the prime mover 40 in a known manner. The controller 62 may be an embedded controller or may be external. The phantom line 63 illustrates an integral device with an embedded controller 62. However, the prime mover 40 and/or the controller 62 may be discrete from the actuator assembly 20.

Indication of the actuator stroke position can be achieved in a number of ways. Discrete positioning can be used to indicate a fixed number of stroke positions, or continuous sensing can be achieved to provide absolute stroke position.

The housing 45 includes four channels at 90 degree spacing about the housing - each channel directly beneath one of the four sides of the housing (best seen in Fig. 14). Two of the channels 975, which may be used for the anti-rotate member(s) 960, are within close proximity of limit switch slots 976 and 977. Limit switch slot 976 is a larger slot used to accommodate economical threaded barrel style switches. The opposite slot, 977 is used to accommodate low profile switches like those commonly used in hydraulic or pneumatic cylinders. Either of these switches may be used in connection with discrete position indication by sensing the proximity of magnet 963 retained within the anti-rotate member 960. As many switches as can fit in the slots can be used. Typically, however, one switch is used at each end of the stroke and a third switch may be located in another position for detection of a home position.

The other two channels 975 that are in close proximity to T-Slots 978 can be left unused, or can also be utilized for continuous position sensing. Continuous position sensing can be performed in a number of ways. One common method is to measure resistance change. In this type of device, a resistance strip is mounted in the channel 975 and another member similar to the anti-rotation member is mounted to glide in the channel and act as the wiper of a variable resistor upon the resistance strip. This provides a resistance measurement that is directly proportional to the actuator stroke position. Another sensing means is to utilize a Temposonics^{®} style sensor as manufactured by MTS Corporation of Minnesota. This sensor consists of a slender tubular sensing device that detects the location of a magnet along its length. To utilize this type of sensor, a ring magnet may be mounted on one of the unused anti-rotation members with the slender tube located within a channel 975. The location of the ring magnet about the slender tube can be sensed by the Temposonics^{®} Sensor. The output from the sensor can be an analog or a digital format. This stroke position information can be provided to a remote controller, as well as a controller embedded within the actuator.

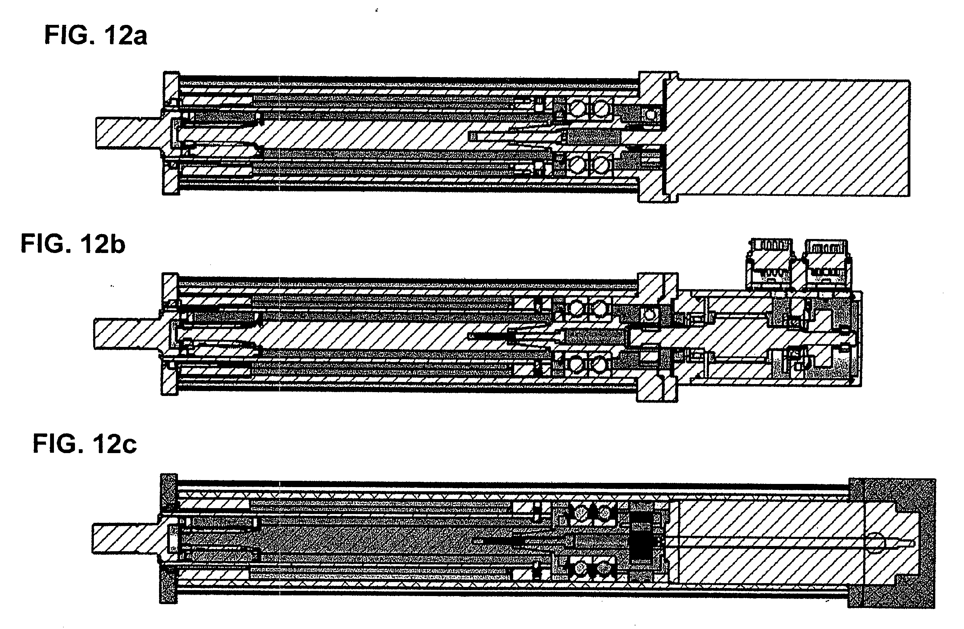

The housing assembly 45 accommodates the components of the linear actuator 20. It may also enclose the prime mover 40. Figs 12a-12c illustrate three different embodiments in which the prime mover is attached directly to the housing assembly 45, but the prime mover includes its own protective housing (Fig. 12a); the prime mover is attached to an end cap (Fig. 12b); and the prime mover and linear actuator are covered by a unitary housing (Fig. 12c). In each case, the power source output shaft is axially aligned with the linear actuator input shaft 25.

A wide variety of prime movers 40 may be utilized, including but not limited to electric motors, hydraulic motors, and pneumatic motors. Those skilled in the art will recognize that all types of motors that provide a rotary output, either directly or by a means of gears, is contemplated. The housing assembly can also be equipped with one or more trunnions, which allow the linear actuator to pivot about the trunnions' axis, giving the linear actuator the ability to continue to align itself with the actuator's load as the load moves in a direction other than the direction of the linear actuator's movement. Still further, the housing assembly 45 can be equipped with a clevis pivot, which allows a mounting rod or shaft to be inserted. The linear actuator can then pivot about the center axis of the mounting rod or shaft.

Figs. 13a - 13c illustrate the movement of the output cylinder 30 occurs without linear movement of the input shaft 25. The anti-rotation member 960 is shown engaging a slot in the housing assembly 45 to limit the rotation of the output cylinder 30 - thereby forcing the extension and retraction of the output cylinder depending on the direction of rotation of the input shaft 25. It will be appreciated that the transmission roller assembly 35 is not shown in Figs. 13a-13c for clarity.

Side load force F1 is shown being applied to the distal end of the output cylinder 30. The other resulting forces F2 and F3 are also shown, where F2 = F1 + F3. It will be appreciated that as the actuator 20 extends, the amount of load applied to the roller assembly 35 is limited by its ability to move and the two, larger, longer rigid bushings 55 directly support the output cylinder 30. The result is that the amount of side load that can be transmitted to the roller assembly 35 even in the most extreme case of the output cylinder 30 fully extended is thereby minimized.

While particular embodiments of the invention have been described with respect to its application, it will be understood by those skilled in the art that the invention is not limited by such application or embodiment or the particular components disclosed and described herein. It will be appreciated by those skilled in the art that other components that embody the principles of this invention and other applications therefor other than as described herein can be configured within the spirit and intent of this invention. The arrangement described herein is provided as only one example of an embodiment that incorporates and practices the principles of this invention. Other modifications and alterations are well within the knowledge of those skilled in the art and are to be included within the broad scope of the appended claims.

## Claims

1. A linear actuator, comprising:
a) a housing assembly;
b) an elongated input shaft rotatably supported relative to the housing, the input shaft having at least a threaded portion;
c) an elongated translating output cylinder with an internally threaded bore;
d) a roller assembly, the roller assembly including camming surfaces for engaging the threaded portion of the input shaft and the output cylinder, wherein the internal threads of the output cylinder contacting the roller camming surfaces causes axial movement of the output cylinder along its threaded length in response to the selective rotation of the input shaft.

2. The linear actuator of claim 1, further comprising:
a) a prime mover
b) a coupling member for coupling the prime mover to the input shaft, wherein bi-directional rotary input is provided to the input shaft.

3. The linear actuator of claim 2, wherein the prime mover is an electric motor.

4. The linear actuator of claim 1, further comprising: bearing members for supporting the input shaft relative to the housing, whereby the input shaft is rotatable about its longitudinal axis and is constrained from movement axially.

5. The linear actuator of claim 1, further comprising: bearing members for supporting the output cylinder relative to the housing, whereby the output cylinder moves axially along its longitudinal axis.

6. The linear actuator of claim 1, wherein the internally threaded bore extends along the entire length of the output cylinder.

7. The linear actuator of claim 2, wherein the coupling member includes a planetary gear reducer.

8. The linear actuator of claim 2, wherein the coupling member includes at least one of the following: a gear train, a pulley, or a sprocket.

9. The linear actuator of claim 1 wherein the extent of the internal threads along the length of the output cylinder is significantly longer than the extent of the thread engaging portion of the input shaft.

10. The linear actuator of claim 1 wherein the camming surfaces of the transmission rollers are threads which are engaged by the internal threads of the output cylinder.

11. The linear actuator of claim 1 wherein the prime mover is integrated into the housing assembly.

12. The actuator of claim 1 and further comprising:
(a) a controller;
(b) the power source is an electric motor;
(c) a means of sensing the position of the output cylinder relative to the housing assembly;
(d) a means for communicating between the embedded controller and to an external control system or a manual user interface.

13. The actuator of claim 12, wherein the controller is embedded.

14. The linear actuator of claim 1, further comprising an anti-rotation mechanism mounted on the output cylinder and engaging a slot in the housing assembly, wherein the output cylinder is constrained from rotating about its longitudinal axis.

15. The linear actuator of claim 12, further comprising an anti-rotation mechanism mounted on the output cylinder and engaging a slot in the housing assembly, wherein the output cylinder is constrained from rotating about its longitudinal axis.

16. The linear actuator of claim 2, wherein the input shaft includes a proximal end which may be modified for connection to the prime mover, and a distal end which is stock, and wherein the proximal end and the distal end are connected to one another to form the input shaft.

17. The linear actuator of claim 16, wherein the connection between the proximal end and the distal end is accomplished with a male end inserted into a female bore and secured with a pin member.

18. The linear actuator of claim 16, wherein the proximal end includes a tapered male member and the distal end includes a tapered bore defining a void, the void arranged and configured to accept the tapered male member, and wherein the void terminates in a threaded portion to receive a threaded securing device.

19. A linear actuator, comprising:
a) a housing;
b) an input shaft rotatably supported relative to the housing, the input shaft having a threaded portion at a distal end and being arranged and configured to cooperatively connect to a prime mover;
c) an output cylinder including an internally threaded bore and having a longitudinal axis, the output cylinder supported within the housing to inhibit rotation and allow movement along the longitudinal axis; and
d) a roller assembly, the roller assembly including camming surfaces for engaging the threaded portion of the input shaft and the internally threaded bore of the output cylinder, wherein the internal threads of the output cylinder contacting the camming surfaces move the transmission rollers along the threaded extent of the output cylinder in response to the selective rotation of the input shaft.

20. The linear actuator of claim 19, wherein the input shaft includes a proximal end which may be modified for connection to the prime mover, and a distal end which is stock, and wherein the proximal end and the distal end are connected to one another to form the input shaft.

21. The linear actuator of claim 19, wherein the connection between the proximal end and the distal end is accomplished with a male end inserted into a female bore and secured with a pin member.

22. The linear actuator of claim 19, wherein the proximal end includes a tapered male member and the distal end includes a tapered bore defining a void, the void arranged and configured to accept the tapered male member, and wherein the void terminates in a threaded portion to receive a threaded securing device.
